# EUROPEAN PATENT APPLICATION

(11) **EP 4 752 001 A1**
(43) Date of publication of application: **03.06.2026**
(21) Application number: 25217125.1
(22) Date of filing: 19.11.2025
(51) Int. Cl.: B60R 1/26, B60K 35/60, B60K 35/10, B60K 35/22, B60K 35/23, B60K 35/26

(54) **VEHICLE CABIN**

(30) Priority: 28.11.2024 GB 202417483
(71) Applicant: Jaguar Land Rover Limited, Coventry, Warwickshire CV3 4LF (GB)
(72) Inventor: Little, Oliver, Coventry, CV3 4LF (GB)
(74) Representative: Jaguar Land Rover Patents Department

(57) **Abstract**

Aspects of the present invention relate to a vehicle cabin (10). The vehicle cabin comprises: an instrument panel structure having an upper surface, the instrument panel structure (20) extending substantially across the width of the vehicle cabin at a forward location thereof; and a trim panel (30) extending at least partially across the width of the vehicle cabin and upstanding from the upper surface of the instrument panel structure at a forward location thereof. The trim panel comprises a rear-view display unit (32), and the rear-view display unit is positioned in the centre of the width of the instrument panel structure.

## Description

### TECHNICAL FIELD

The present disclosure relates to a vehicle cabin. Aspects of the invention relate to a vehicle cabin and a vehicle.

### BACKGROUND

It is known to provide rear view mirrors within vehicle cabins to allow a vehicle operator or occupant to see an area directly behind the vehicle. Such mirrors are often mounted to or adjacent a roof of the vehicle cabin and as such can obstruct a portion of the vehicle operator's view out of the vehicle cabin. Further, when changing between looking forward out of the vehicle cabin and looking at a rear-view mirror inside the vehicle cabin there is a requirement for the vehicle operator to change their eye focus when moving between the two views.

It is an aim of the present invention to address one or more of the disadvantages associated with the prior art.

### SUMMARY OF THE INVENTION

Aspects and embodiments of the invention provide a trim panel, a vehicle cabin and a vehicle.

According to an aspect of the present invention, there is provided a trim panel for a vehicle cabin comprising an instrument panel structure having an upper surface, the trim panel couplable to the instrument panel structure to upstand from the upper surface of the instrument panel structure, the trim panel comprising a rear-view display unit.

According to another aspect of the present invention, there is provided a vehicle cabin comprising: an instrument panel structure having an upper surface, the instrument panel structure extending substantially across the width of the vehicle cabin at a forward location thereof; and a rear-view display unit upstanding from the upper surface of the instrument panel structure.

According to a further aspect of the present invention, there is provided a vehicle cabin comprising: an instrument panel structure having an upper surface, the instrument panel structure extending substantially across the width of the vehicle cabin at a forward location thereof; a windscreen extending upward from the upper surface of the instrument panel structure; and a trim panel extending from the upper surface of the instrument panel structure towards the windscreen, wherein the trim panel comprises a rear-view display unit adjacent the base of the windscreen.

According to a still further aspect of the present invention, there is provided a vehicle cabin comprising: an instrument panel structure having an upper surface, the instrument panel structure extending substantially across the width of the vehicle cabin at a forward location thereof; and a trim panel extending at least partially across the width of the vehicle cabin and upstanding from the upper surface of the instrument panel structure at a forward location thereof, wherein the trim panel comprises a rear-view display unit, and wherein the rear-view display unit is positioned in the centre of the width of the instrument panel structure.

The instrument panel structure may define an area of the cabin forward of a vehicle operator and/or a passenger in the vehicle cabin. The upper surface of the instrument panel structure may comprise a cosmetic surface defining a dashboard extending across the width of the vehicle cabin. Providing a rear-view display unit in a trim panel upstanding from the upper surface of the instrument panel structure may remove the need for a rear-view mirror depending from a roof of the vehicle cabin. By incorporating a rear-view display unit into a trim panel on the instrument panel structure, the rear-view display unit may obscure a smaller area of a vehicle operator's view out of the vehicle cabin compared to a traditional rear-view mirror hanging from a roof of the cabin. Further, it may be easier for a vehicle operator to switch focus between a forward view and a rear-view display unit upstanding from the instrument panel than between a forward view and a traditional reflective rear-view mirror.

The upper surface of the instrument panel structure may be substantially planar.

A substantially planar upper surface if the instrument panel may improve ease of assembly for the instrument panel structure and trim panel.

The rear-view display unit may be positioned in the centre of the width of the trim panel, optionally in the centre of the width of the instrument panel structure.

Positioning the rear-view display unit in the centre of the trim panel, optionally in the centre of the instrument panel structure may allow a common trim panel to be used, for example on left and right hand drive vehicles.

The width of the trim panel and/or the width of the instrument panel structure is measured parallel to the width dimension of the vehicle cabin. The width of the vehicle cabin is measured perpendicular to the forward-rearward direction of the vehicle cabin and/or vehicle.

Positioning the rear-view display unit in the centre of the trim panel, optionally in the centre of the instrument panel structure may allow a common trim panel to be used, for example on left and right hand drive cars.

The vehicle cabin may further comprise a windscreen upstanding from the upper surface of the instrument panel structure from a position forwards of the trim panel. The windscreen may have an upper edge located at a first height H1 from the upper surface of the instrument panel structure. The rear-view display unit may extend upward from the upper surface of the instrument panel structure by a second height H2. The second height H2 of the rear-view display unit may be less than 30%, preferably less than 25%, further preferably less than 22% of the first height H1.

The upper edge of windscreen may be defined as the edge of the windscreen that meets a roof portion of the vehicle cabin, optionally wherein the roof portion of the vehicle cabin is a portion of the body in white of the vehicle.

Minimising the maximum height of the rear-view display unit relative to the upper surface of the instrument panel may reduce the area of a vehicle operator's forward view that is potentially obscured by the rear-view display unit.

The vehicle cabin may further comprise first and second pillars located on opposite sides of the vehicle cabin. The instrument panel structure and/or the trim panel may extend from the first pillar to the second pillar.

The first and second pillars, which may be termed the A pillars, are arranged on opposite sides of the vehicle cabin. The first and second pillars may provide convenient structural points to which the instrument panel structure and/or the trim panel may be coupled. The first and second pillars may each comprise a part of a body in white of a vehicle in which the vehicle cabin subassembly is incorporated.

The vehicle cabin may further comprise a main display unit extending upward from the upper surface of the instrument panel structure. The trim panel may be positioned forward of the main display unit.

The term forward is here defined as a direction perpendicular to the width dimension of the vehicle cabin and towards a front of the vehicle. That is to say that, from the vehicle operating position, the trim panel is positioned closer to the front of the instrument panel (and hence the vehicle cabin and vehicle) than the main display unit. In other words, the main display unit is positioned closer to the vehicle operating position than the trim panel.

The main display unit may be used to display the majority of information available to an operator of the vehicle. A user of the vehicle may be able to interact with the main display unit (for example via a touch screen) to control the min display unit and/or components coupled thereto. Positioning the trim panel forward of the main display unit may position the trim panel further away from a user of the vehicle, which may reduce the likelihood or prevent the user from interacting with the trim panel and hence the rear-view display panel.

The main display unit may comprise a main display screen. The rear-view display unit may comprise a rear-view display screen. The main display screen and the rear-view display screen may be positioned such that they are both visible from a vehicle operating position. The vehicle operating position may be directly rearward of the main display unit.

Both the main display screen and the rear-view display screen may be configured to display information that is useful to an operator of a vehicle whilst the vehicle is in use. Providing both screens as being visible to a vehicle operator when in use may allow different information to be shown on each screen and still be visible to the operator.

The trim panel may extend across the vehicle cabin in a first direction. The rear-view display unit may comprise a rear-view display screen facing in a second direction that is orthogonal to the first direction and towards a vehicle operating position. The vehicle operating position may be defined as a location within the vehicle cabin which a vehicle operator is intended to occupy or where a vehicle operator is intended to sit.

Providing a rear-view display screen facing towards a vehicle operator when in use (i.e. when a vehicle operator is in the vehicle cabin) may allow the operator to view the screen more easily. Providing the screen facing in a direction orthogonal or perpendicular to the instrument panel (i.e. providing the screen perpendicular to a width dimension of the vehicle cabin) may allow a common rear-view display unit and/or trim panel to be used in different vehicles, for example in left and right handed vehicles.

The main display unit may be positioned towards a first lateral side of the instrument panel structure. The rear-view display unit may be translationally offset from the main display unit away from the first lateral side of the instrument panel structure.

Offsetting the main display unity from the rear-view display unit may reduce the likelihood of the main display unit obstructing a vehicle operator's view of the rear-view display unit. Providing the main display unit towards one side of the instrument panel structure may allow the main display unit to be positioned directly in front of an operator of the vehicle.

A portion of the main display unit may laterally overlap a portion of the rear-view display unit.

Overlapping the main display unit and the rear-view display unit may reduce the overall packaging size of the two display units whilst still allowing both to be visible simultaneously by a vehicle operator.

The trim panel may further comprise a rearward facing panel. The rear-view display unit may comprise a rear-view display screen that is flush with the rearward facing panel.

Providing the rear-view display unit with a screen that is flush with a front panel of the trim panel structure may improve the robustness of the vehicle cabin by reducing the likelihood of dirt ingress through the interface between the rear-view display unit and the instrument panel structure.

The rearward facing panel comprises a first portion extending from a first side of the rear-view display unit and a second portion extending from a second side of the rear-view display unit.

The rearward facing panel may be arranged symmetrically about the rear-view display unit. This may allow a trim panel having a common rearward facing panel to be used on a variety of vehicles, for example left and right hand drive vehicles.

The vehicle cabin may further comprise a driver seat for supporting a vehicle operator, wherein there is a direct line of sight between a vehicle operator supported by the seat and the rear-view display unit.

Providing a direct line of sight between the rear-view display unit and a vehicle operator sitting in a driver seat may increase the likelihood of the information displayed by the rear-view display unit being visible to the vehicle operator at all times whilst the vehicle is in use.

The rear-view display screen may be positioned such that there is direct line of sight from a vehicle operator viewing volume to the rear-view display screen.

The vehicle operator viewing volume may be defined as a region corresponding to a vehicle operator's eye position when occupying the vehicle operating position. It is preferable to maximise the viewing volume to increase the likelihood of a vehicle operator or the eyes of a vehicle operator being within the viewing region whilst the vehicle is in use. In particular, it is preferable to maximise the height and depth of the viewing volume to increase the likelihood of the eyes of a vehicle operator being within the viewing region regardless of the height of the vehicle operator.

There may be a direct line of sight between all points within the vehicle operator viewing volume and the main display screen.

Providing a direct line of sight between to both the main display screen and the rear-view display screen may allow a user of the vehicle to view both screens without having to move their head. A direct line of sight is defined as an uninterrupted view of the screen in question, such that no other vehicle feature encroaches upon the line of sight.

At least a portion of the rear-view display screen may be directly visible above an upper edge of the main display unit when viewed from the vehicle operator viewing volume.

Providing a direct line of sight to the rear-view display unit over the top of the main display unit may allow a vehicle operator to easily switch between focussing on the main display screen and the rear-view display screen.

The vehicle operator viewing volume may be directly rearward of the main display unit.

This may for example allow the main display unit to be positioned directly above a steering wheel of the vehicle, which may allow a vehicle operator to easily operate the vehicle and interact with the main display unit.

According to a yet further aspect of the invention, there is provided a vehicle comprising the vehicle cabin of the still further aspect of the invention; and a camera arranged to capture an image of an area behind the vehicle, wherein the rear-view display unit is configured to display the image from the camera in real time.

Providing a camera to provide real time images of an area behind the vehicle removes the need for a rear-view mirror comprising a reflective surface.

The rear-view display unit may be configured to display only the image from the camera. In other words, the rear-view screen does not display any information other than the real time image from the camera.

Displaying only the image from the camera on the rear-view display unit may reduce the likelihood of a vehicle operator becoming distracted when using the rear-view display unit to view an area behind the vehicle.

Within the scope of this application it is expressly intended that the various aspects, embodiments, examples and alternatives set out in the preceding paragraphs, in the claims and/or in the following description and drawings, and in particular the individual features thereof, may be taken independently or in any combination.

That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Figure 1 shows a schematic representation of a vehicle;
Figure 2 shows a schematic representation of a portion of a first vehicle cabin;
Figure 3 shows a schematic representation of a portion of a second vehicle cabin;
Figure 4 shows a further schematic representation of the vehicle cabin of Figure 3;
Figure 5 shows a still further schematic representation of the vehicle cabin of Figure 3; and
Figure 6 shows a schematic representation of a portion of a third vehicle cabin.

### DETAILED DESCRIPTION

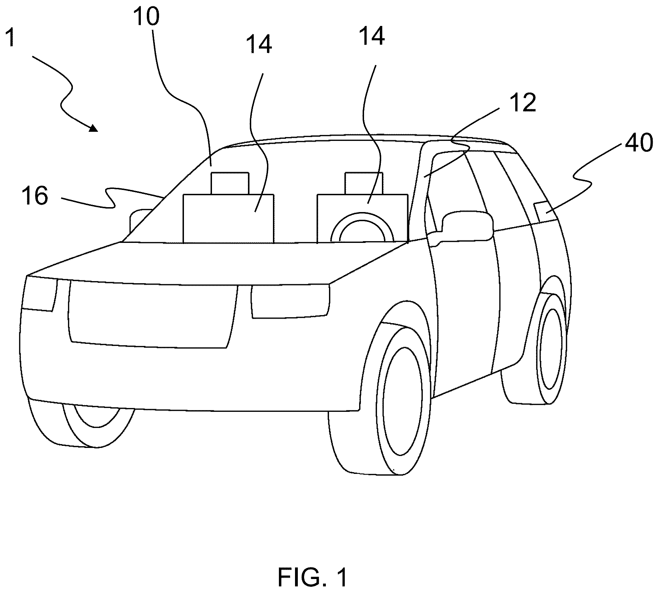

Figure 1 shows a vehicle 1 to provide context for the invention. The vehicle 1 comprises a vehicle cabin 10 in which vehicle occupants may sit. One or more seats 14 may be provided to support a passenger and/or an operator of the vehicle 1. The vehicle cabin 10 may be positioned towards the front of the vehicle 1, the front of the vehicle 1 being defined by the usual intended direction of travel of the vehicle 1 in normal operation. The vehicle cabin 10 may extend across substantially the full width of the vehicle 1.

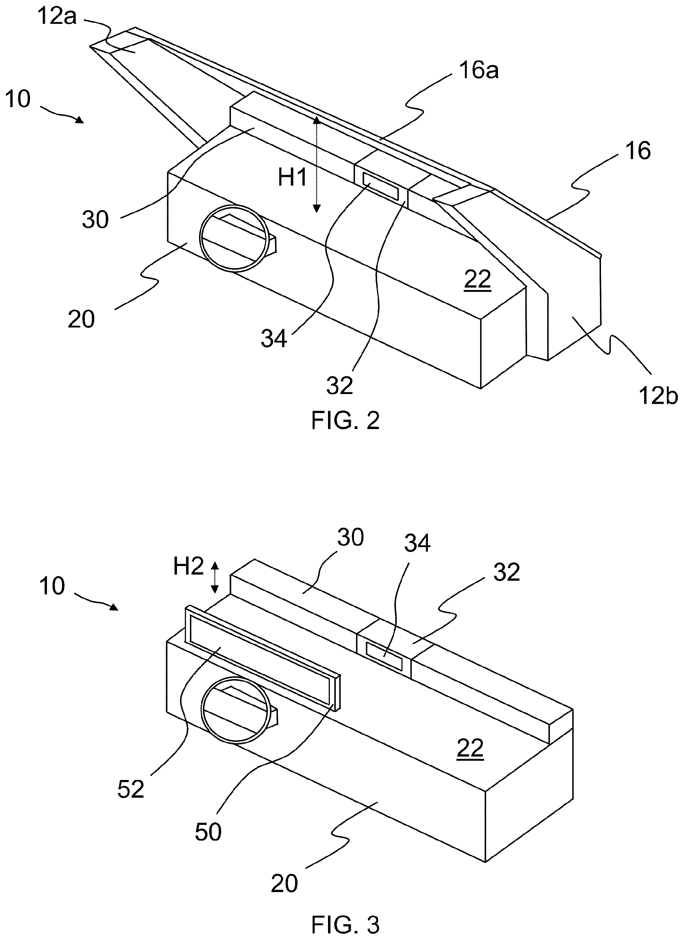

The vehicle cabin 10 is defined by one or more vehicle structures 12 which may collectively be referred to as a body in white or a portion of the body in white. The body in white may comprise a series of vehicle structures 12 coupled together, for example using welding and/or riveting. The vehicle cabin 10 is at least partially defined by a roof portion of the vehicle structure 12, which may define an upper region of the vehicle cabin 10. The vehicle structures 12 may comprise pillars, which may be termed A-pillars, and between which a windscreen of the vehicle may be located. An example of a vehicle cabin 10 comprising a first A-pillar 12a and a second A-pillar 12b on opposite sides of the vehicle cabin 10 is shown more clearly in Figure 2.

Figure 2 shows a schematic view of a portion of the vehicle cabin 10. The vehicle cabin 10 comprises an instrument panel structure 20 that extends across the width of the vehicle cabin 10. The instrument panel structure 20 is positioned at a forward location of the vehicle cabin 10, forward here defined as being towards the front of the vehicle 1 The instrument panel structure 20 is forward of the front seats 14 of the vehicle. The instrument panel structure 20 defines a support structure for housing and/or supporting components within the vehicle cabin 10. Examples of these components may include operator controls, a steering wheel and one or more storage compartments. The instrument panel 20 may be coupled directly to the A-pillars 12a, 12b as shown in Figure 2, which may further support a windscreen 16 of the vehicle 1 (omitted from Figures 3 to 6 for clarity).

The vehicle cabin 10 further comprises a trim panel 30 located on top of the instrument panel structure 20. The trim panel 30 extends both from an upper surface 22 of the instrument panel structure 20 and at least partially across the width of the vehicle cabin 10. The upper surface 22 of the instrument panel structure 20 may be substantially planar as shown in Figure 2, which may improve the ease of locating the trim panel 30 to the instrument panel structure 20. The trim panel 30 may be provided at a forward edge or location of the instrument panel structure 20, and as such may extend from the upper surface 22 of the instrument panel structure 20 towards a windscreen 16 of the vehicle 1. The trim panel 30 comprises a rear-view display unit 32. The rear-view display unit 32 is therefore provided adjacent the upper surface 22 of the instrument panel structure 20 and/or towards the bottom of the windscreen 16 as viewed from a vehicle operator within the vehicle cabin 10. A position within the vehicle cabin 10 occupied by a vehicle operator when the vehicle is in use may be referred to as a vehicle operating position. It will be appreciated that the trim panel 30 and rear-view display unit 32 may be provided as separate components. As such, in an alternative embodiment the vehicle cabin 10 may comprise a rear-view display unit 32 upstanding from the upper surface 22 of the instrument panel structure 20 with no trim panel 30.

The rear-view display unit 32 comprises a rear-view display screen 34 configured to display an image of an area to the rear of the vehicle 1. The vehicle 1 may therefore comprise a camera 40 arranged to capture an image of the area behind the vehicle 1. Figure 1 shows a schematic representation of a vehicle 1 comprising a camera 40, however it will be appreciated that the camera 40 may be positioned anywhere about the vehicle 1 where it is able to capture the view that is required to be shown on the display screen 34. The rear-view display screen 34 may be configured to display a live stream of the image captured by the camera 40 such that a vehicle operator can see an image of the area behind the vehicle 1 at all times during use. As such, the rear-view display unit 30 may replace a traditional rear-view mirror often provided in vehicle cabins. The rear-view display unit 32 may be configured to display only an image from the camera 40 (i.e. no further vehicle information) to reduce the likelihood of a vehicle operator becoming distracted when viewing the rear-view display unit 32.

In the example shown, the trim panel 30 comprises a rearward facing panel 31 with which the rear-view display screen 34 is flush.

It is preferable to position the rear-view display unit 30, and in particular the rear-view display screen 32, such that it is readily visible to a vehicle operator. This may be achieved for example by positioning the rear-view display unit at the approximate centre of the width of the vehicle cabin 10 (optionally also in the centre of the instrument panel structure 20). This may further be preferable since a common rear-view display unit 32 position may be used for both left- and right-hand drive vehicles (i.e. vehicles where a vehicle operator sits towards the left and the right of the vehicle respectively). Similarly, it may be preferable to provide the rear-view display unit 30 in the centre of the trim panel 30 such that a common trim panel 30 can be used for both left- and right-hand drive vehicles.

The rear-view display screen 32 may also be orientated to be more easily visible to a vehicle operator. As described previously, the trim panel 30 extends across the width of the vehicle cabin 10 in a first direction. The rear-view display screen 32 may be orientated to face in a second direction that is orthogonal to the first direction and is towards the vehicle operating position occupied by a vehicle operator inside the vehicle cabin 10. That is to say that the rear-view display screen 32 may face directly backwards away from the front of the vehicle 1. By not angling the rear-view display screen 32 relative to the forward-backward direction of the vehicle 1, the screen 32 may be more easily visible to a vehicle operator across a greater range of locations inside the vehicle cabin 10.

To reduce the area of a vehicle operator's forward view that is potentially obscured by the rear-view display unit 32, it is preferable to minimise the height which the rear-view display unit 32 and/or the trim panel 30 extends above the upper surface 22 of the instrument panel structure 20. The windscreen 16 may have an upper edge 16a that meets a roof portion (not shown) of the vehicle cabin 10. The upper edge 16a of the windscreen 16 is located at a height H1 from the upper surface 22 of the instrument panel structure 20. The rear-view display unit 32 and/or the trim panel 30 extends upwards from the upper surface 22 of the instrument panel structure 20 by a height H2. The height H2 of the rear-view display unit 32 and/or the trim panel 30 may be less than 30%, preferably less than 25%, further preferably less than 22% of the height H1 of the upper edge 16a of the windscreen 16. The height H2 of the rear-view display unit 32 may be less than 120 millimetres, preferably less than 100 millimetres, further preferably less than 90 millimetres.

Figure 3 shows a schematic view of a portion of a further example of a vehicle cabin 10 with A-pillars omitted for clarity. In this example, the vehicle cabin 10 further comprises a main display unit 50 extending upward from the upper surface 22 of the instrument panel structure 20. The main display unit 50 comprises a display screen 52 configured to display any number of vehicle parameters, such as for example vehicle speed, vehicle temperature, vehicle mode, navigational information and/or infotainment. The main display unit 50 may be the primary non-steering or speed modulating interface between a vehicle operator and the vehicle 1, and hence it is preferable to position the main display unit 50 close to, for example in front of, the vehicle operator. As such, the main display unit 50 may be positioned towards a first side of the instrument panel structure 20 and the vehicle cabin 10 as shown in Figure 3.

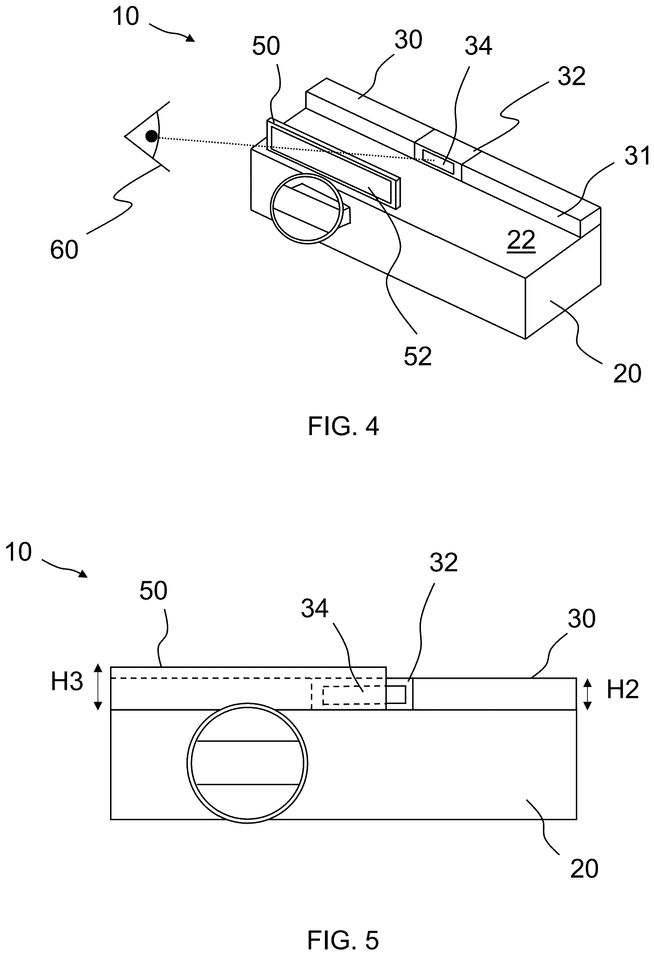

It is important that a vehicle operator can see both the main display screen 52 and the rear-view display screen 34 from a single seated position. As such the main display unit 50 and the rear-view display unit 32 are offset from one another such that both are visible when the vehicle 1 is in use by a vehicle operator. This may be achieved for example by positioning the trim panel 30 and hence the rear-view display unit 32 forward of the main display unit 50, such that there is a direct line of sight between the vehicle operating position and the rear-view display screen 34. The main display unit 50 is therefore closer to a vehicle operator than the rear-view display unit 32. Figure 4 shows a schematic representation of such an arrangement, with a direct line of sight provided between the vehicle operating position 60 and the rear-view display unit 32 over the top of the main display unit 50.

The main display unit 50 and the rear-view display unit 32 may further be translationally offset from one another in the width direction of the vehicle cabin 10 as shown in Figures 3 to 5. Where the main display unit 50 is positioned towards a first side of the vehicle cabin 10, the rear-view display 32 unit may be laterally offset away from the first side of the vehicle cabin 10, for example positioned in the centre of the vehicle cabin 10. The two display units may be laterally offset such that a portion of the main display unit 50 overlaps a portion of the rear-view display unit 32 as shown in Figure 5. The two display units may overlap when viewed from the perspective of a vehicle operator in the vehicle cabin 10, or when viewed from the centre of the vehicle cabin 10 directly forwards as shown in Figure 5.

It will be appreciated that the main display unit 50 may extend above the upper surface 22 of the instrument panel structure 20 by a height H3 greater than the height H2 of the trim panel 30. The main display unit 50 may extend to any height H3 above the upper surface 22 of the instrument panel structure 20, provided that the rear-view display unit 32 is visible to a vehicle operator over an upper edge of the main display unit 50.

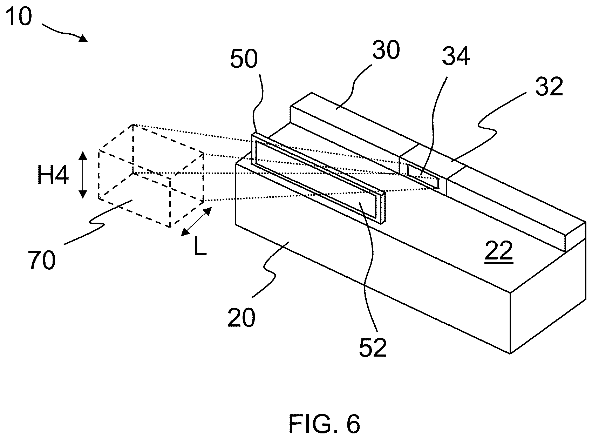

There may be a vehicle operator viewing volume 70 defined within the vehicle cabin 10 as shown in Figure 6. It will be appreciated that the vehicle operator viewing volume 70 is not a physical component, but rather a three-dimensional space within the vehicle cabin 10 within which there is a clear line of sight to the rear-view display screen 34, optionally the rear-view display unit 32. It will therefore be appreciated that, provided a vehicle operator's eyes 60 are within the vehicle operator viewing volume 70, the vehicle operator will be able to view the rear-view display screen 34. It is preferable to maximise the dimensions of the vehicle operator viewing volume 70, in particular the height H4 and the length L of the vehicle operator viewing volume 70. This may reduce the likelihood of a vehicle operator's eyes 60 being outside of the vehicle operator viewing volume 70, regardless of the vehicle operator's height. The dimensions of the vehicle operator viewing volume 70 will be dictated by at least the distance between the vehicle operator and the two display screens, the relative offset between the main display screen 52 and the rear-view display screen 34, and the relative heights H1, H2 of the main display screen 52 and the rear-view display screen 34. As shown in Figure 6, the vehicle operator viewing volume 70 may be directly rearward of the main display unit 50.

It will be appreciated that various changes and modifications can be made to the present invention without departing from the scope of the present application.

## Claims

1. A vehicle cabin comprising:
an instrument panel structure having an upper surface, the instrument panel structure extending substantially across the width of the vehicle cabin at a forward location thereof; and
a trim panel extending at least partially across the width of the vehicle cabin and upstanding from the upper surface of the instrument panel structure at a forward location of thereof, wherein the trim panel comprises a rear-view display unit, and wherein the rear-view display unit is positioned in the centre of the width of the instrument panel structure.

2. A vehicle cabin according to claim 1, wherein the rear-view display unit is positioned in the centre of the width of the trim panel.

3. A vehicle cabin according to any preceding claim, further comprising a windscreen upstanding from the upper surface of the instrument panel structure from a position forwards of the trim panel, the windscreen having an upper edge, wherein the upper edge of the windscreen is located at a first height H1 from the upper surface of the instrument panel structure; the rear-view display unit extends upward from the upper surface of the instrument panel structure by a second height H2; and wherein the second height H2 of the rear-view display unit is less than 30% of the first height H1.

4. A vehicle cabin according to any preceding claim, further comprising first and second pillars located on opposite sides of the vehicle cabin, wherein the instrument panel structure and/or the trim panel extends from the first pillar to the second pillar.

5. A vehicle cabin according to any preceding claim, further comprising a main display unit extending upward from the upper surface of the instrument panel structure, wherein the trim panel is positioned forward of the main display unit.

6. A vehicle cabin according to claim 5, wherein the main display unit comprises a main display screen and the rear-view display unit comprises a rear-view display screen, and wherein the main display screen and the rear-view display screen are positioned such that they are both visible from a vehicle operating position, the vehicle operating position being directly rearward of the main display unit.

7. A vehicle cabin according to claim 6, wherein the trim panel extends across the vehicle cabin in a first direction, and wherein the rear-view display screen faces in a second direction that is orthogonal to the first direction.

8. A vehicle cabin according to any of claims 5 to 7, wherein the main display unit is positioned towards a first lateral side of the instrument panel structure, and the rear-view display unit is translationally offset from the main display unit away from the first lateral side of the instrument panel structure.

9. A vehicle cabin according to claim 8, wherein a portion of the main display unit laterally overlaps a portion of the rear-view display unit.

10. A vehicle cabin according to any of claims 6 to 9, wherein the trim panel further comprises a rearward facing panel, and wherein the rear-view display screen of the rear-view display unit is flush with the rearward facing panel.

11. A vehicle cabin according to any of claims 6 to 10, wherein the rear-view display screen is positioned such that there is direct line of sight from a vehicle operator viewing volume to the rear-view display screen.

12. A vehicle cabin according to claim 11, wherein there is a direct line of sight between all points within the vehicle operator viewing volume and the main display screen.

13. A vehicle cabin according to claim 12, wherein at least a portion of the rear-view display screen is directly visible above an upper edge of the main display unit when viewed from the vehicle operator viewing volume.

14. A vehicle cabin according to claim 12 or 13, wherein the vehicle operator viewing volume is directly rearward of the main display unit.

15. A vehicle comprising the vehicle cabin of any preceding claim; and a camera arranged to capture an image of an area behind the vehicle, wherein the rear-view display unit is configured to display the image from the camera in real time.
